# EUROPÄISCHE PATENTSCHRIFT

(11) **EP 0 846 091 B1**
(45) Veröffentlichungstag und Bekanntmachung des Hinweises auf die Patenterteilung: **22.09.1999**
(21) Anmeldenummer: 96927676.5
(22) Anmeldetag: 03.08.1996
(51) Int. Cl.: C04B 41/45, C03C 8/00

(54) **VERFAHREN ZUR HERSTELLUNG KERAMISCHER BESCHICHTUNGEN UND BESCHICHTUNGSPULVER HIERFÜR**
PROCESS FOR PRODUCING CERAMIC COATINGS AND COATING POWDER THEREFOR
PROCEDE DE PRODUCTION DE REVETEMENTS CERAMIQUES ET POUDRE DE REVETEMENT UTILISEE A CET EFFET

(30) Priorität: 24.08.1995 DE 19531170
(43) Veröffentlichungstag der Anmeldung: 10.06.1998
(73) Patentinhaber: CERDEC AKTIENGESELLSCHAFT KERAMISCHE FARBEN, D-60327 Frankfurt (DE)
(72) Erfinder: SCHRIENER, Andreas, D-61350 Bad Homburg (DE); SCHWAN, Michael, D-90596 Schwanstetten (DE); TRIPTRAP, Herbert, D-60439 Frankfurt (DE)
(86) Internationale Anmeldenummer: EP9603435
(87) Internationale Veröffentlichungsnummer: WO9708115

(56) Entgegenhaltungen:
- EP-A- 0 317 694
- EP-A- 0 382 003
- EP-A- 0 442 109
- WO-A-94/26679

## Beschreibung

Die Erfindung richtet sich auf ein elektrostatisch applizierbares Beschichtungspulver zur Herstellung keramischer Beschichtungen auf metallischen und keramischen Substraten, insbesondere ungebrannten und bisquitgebrannten keramischen Substraten. Die Erfindung richtet sich ferner auf ein Verfahren zur Herstellung des Beschichtungspulvers sowie auf seine Verwendung zum Glasieren, Engobieren und Dekorieren keramischer Substrate, wobei das Verwendungsverfahren einen elektrostatischen Auftrag eines Beschichtungspulvers umfaßt.

Zur Herstellung von keramischen Beschichtungen, etwa Emails und Glasuren, auf brandfähigen Substraten werden überwiegend wäßrige Schlicker eingesetzt; nach der Applikation des Schlickers wird das hiermit beschichtete Substrat gebrannt, wobei das im Schlicker enthaltende einbrennfähige Material zu einer keramischen Schicht zusammenschmilzt oder sintert. Aufgrund der mit der Verwendung wäßriger Schlicker verbundenen Nachteile, wie Abwasserprobleme und hoher Energiebedarf, gewinnen die elektrostatische Pulverbeschichtung metallischer und keramischer Erzeugnisse an Bedeutung.

Bei der elektrostatischen Pulveremaillierung metallischer Substrate werden Emailpulver eingesetzt, welche zwecks Erhöhung des Oberflächenwiderstands in der Regel mit siliciumorganischen Verbindungen beschichtet sind - siehe DE-A 39 09 656. Die Herstellung derartig beschichteter Emailpulver erfordert außer intensivem Mischen des Emailpulvers mit den Beschichtungskomponenten eine thermische Behandlung, wodurch sich derartige Emailpulver verteuern.

Die elektrostatische Pulverbeschichtung von keramischen Substraten, wie Glas, Porzellan, Steingut und Steinzeug, mit einem einbrennfähigen Material bereitet derzeit noch größere Probleme als die Pulverbeschichtung von Metallen. Gemäß GB-B 1 198 462 wird eine Verbesserung durch eine Vorbehandlung des Substrats mit einer wäßrigen Elektrolytlösung erzielt. Diese Behandlung erhöht die Beschichtungskosten und vermag zudem ein weiteres Problem, nämlich die ungenügende Haftung des Pulvers auf dem Substrat, nicht zu beheben. Gemäß DE-AS 22 04 982 läßt sich die Haftung verbessern, wenn ein auf 450 bis 550 °C erhitztes Substrat unmittelbar elektrostatisch beschichtet wird. Dieses Verfahren ist technisch aufwendig und läßt sich nur anwenden, wenn das Beschichtungspulver bei der genannten Temperatur schmilzt, was für viele Glasuren nicht zutrifft. Zur Herstellung glasierter Flachziegel werden nach dem Verfahren der DE-PS 29 41 026 Glasurpulver, welche eine Teilchengröße von unter 80 µm und einen spezifischen elektrischen Widerstand von größer 1 ^{.} 10¹⁰ Ohm ^{.} m aufweisen, elektrostatisch aufgetragen; der spezifische elektrische Widerstand wird wie bei den zuvor genannten Emailpulvern durch Beschichtung mit einem Polysiloxan erzielt. In ähnlicher Weise lassen sich auch keramische Substrate engobieren - EP-A 0 442 109.

Schließlich läßt sich die Haftfestigkeit eines elektrostatisch aufzutragenden Glasurpulvers auch erhöhen und eine ausreichende Menge Glasurpulver auftragen, wenn das Substrat zunächst mit einer eine Haftkomponente, etwa einem Polymer, und eine zur Glasbildung befähigte Komponente enthaltenden wäßrigen Haftschicht versehen wird - DE-A 42 39 541. Das Erfordernis der nassen Haftschicht als Vorstufe zur elektrostatischen Glasierung ist nachteilig.

Eine Möglichkeit, die Haftfestigkeit eines elektrostatisch auf einem brandfähigen Substrat abgeschiedenen einbrennfähigen keramischen Materials so zu verbessern, daß das beschichtete Substrat ohne Gefahr des Abfallen des aufgetragenen Beschichtungspulvers vor dem eigentlichen Brand sicher gehandhabt werden kann, lehrt die WO 94/26679: Das Beschichtungspulver enthält hierbei außer einem einbrennfähigen Pulver, etwa einem Glasurpulver, ein beim Brand rückstandsfrei verbrennendes Haftmittel, das thermisch oder durch Feuchtigkeit aktiviert wird, um die Teilchen der Schicht untereinander und mit dem Substrat ausreichend zu fixieren. Thermoplastische Materialien, wie Polyolefine, lassen sich physikalisch aktivieren, indem das Substrat vor dem elektrostatischen Besprühen oder danach auf eine Temperatur oberhalb des Schmelzpunktes des Polymers erhöht wird; durch Abkühlen und damit Erstarren des Thermoplasts wird eine Fixierung erzielt. Eine andere Art der Aktivierung, nämlich eine Behandlung des beschichteten Substrats in einer Befeuchtungskammer, wird bei der Verwendung von Dextrin als Haftmittel vorgeschlagen. Bevorzugte Beschichtungspulver enthalten Polysiloxan-beschichtete Glasfritten im Gemisch mit 10 bis 15 Gew.-% Thermoplast oder 5 bis 10 Gew.-% Dextrin.

Das Gesamtverfahren gemäß bevorzugter Ausführungsform des elektrostatischen Glasierens gemäß WO 94/26679 ist sehr aufwendig. Zudem werden Glasurpulver ohne Polysiloxanbeschichtung als ungenügend elektrostatisch aufladbar angesehen, so daß die elektrostatische Beschichtung nicht problemfrei verläuft. Zur Herstellung eines glasurfähigen Beschichtungspulvers wird die Glasur zunächst mit einem Polysiloxan gemischt und thermisch nachbehandelt; anschließend wird das Polysiloxan beschichtete Glasurpulver bei einer Temperatur oberhalb des Schmelzpunktes des Haftmittels, wie Polyethylen, gemischt und anschließend das Gemisch gemahlen. Ein so hergestelltes, Polyethylen als Haftmittel enthaltendes Pulver ist nicht nur aufwendig herzustellen, sondern es ist auch schlecht rieselfähig. Die Fluidisierung kann zwar in bekannter Weise durch Mitverwendung pyrogener Oxide, wie SiO2, verbessert werden, diese haben aber den Nachteil, daß bei der in der Praxis erforderlichen Aufwandmenge der Glanz der Glasur deutlich reduziert wird. Zudem beeinflußt der Einsatz pyrogener Kieselsäure das elektrostatische Verhalten des Beschichtungspulvers negativ.

Anhand von in Anlehnung an das in der WO 94/26679 beschriebene Verfahren durchgeführten Versuchen mit vereinfachter Aufbereitung des Beschichtungspulvers - ohne Polysiloxanbeschichtung und ohne thermische Behandlung des Glasur-/Polyethylengemischs - wurde als Nachteil festgestellt, daß bei Verwendung handelsüblicher Glasurpulver die Glasuroberfläche stark wellig und mit Glasurfehlern übersät und bei hoher Einsatzmenge des Haftmittels die Auftragsmenge limitiert war, so daß keine ausreichend dicke - üblicherweise mindestens 100 bis 250 µm, teilweise auch bis 400 µm - Glasurschicht erhalten werden konnte - siehe Vergleichsbeispiele (VB 1 und 2). Die Glasurfehler lassen sich teilweise daher erklären, daß es mit den untersuchten Beschichtungspulvern zu Anbackungen am Prallteller und an der Mittelelektrode der ElektrostatikSprühpistole kommt, welche von Zeit zu Zeit abspringen und als Spratzer auf das zu beschichtende Substrat gelangen und auch nach dem Brand sichtbar bleiben.

Aufgabe der Erfindung ist demgemäß, ein gegenüber aus der WO 94/26679 bekannten Beschichtungspulvern verbessertes Beschichtungspulver zu schaffen, das sich auch in einfacher Weise herstellen lassen sollte. Unter Verwendung des zu schaffenden Beschichtungspulvers sollten fehlerfreie Beschichtungen in gewünschter Auftragsstärke und Qualität erhalten werden können.

Die Aufgabe wird gelöst durch ein elektrostatisch applizierbares Beschichtungspulver, bestehend aus im wesentlichen einem pulverförmigen einbrennfähigen Material aus der Reihe der Glasuren, Engoben und Emaillen und einem durch thermische Behandlung, Behandlung mit Wasserdampf, Ammoniak oder einem aciden Vernetzer oder durch Strahlenhärtung aktivierbaren pulverförmigen organischen Haftmittel, das dadurch gekennzeichnet ist, daß das pulverförmige einbrennfähige Material eine Kornverteilung mit einem d₉₀-Wert von kleiner 35 µm, einem d₅₀-Wert im Bereich von 5 bis 25 µm und einem d₁₀-Wert von gleich oder größer 2 µm aufweist.

Die durch die Auswahl des Kornspektrums des einbrennfähigen Materials im Beschichtungspulver erzielbaren Vorteile sind vielseitig und waren nicht vorhersehbar. Es wurde festgestellt, daß die Eignung handelsüblicher Glasurpulver, deren Kornspektrum meistens zwischen 1 und 70 µm und deren d₉₀-Wert um 40 µm liegt, zur Herstellung elektrostatisch applizierbarer Glasurpulver dadurch wesentlich verbessert werden kann, daß das Kornspektrum verengt wird, und zwar durch Reduzierung des groberen Kornanteils, so daß ein d₉₀-Wert von kleiner 35 µm, vorzugsweise kleiner 32 µm resultiert. Sofern der d₉₀-Wert bereits unterhalb der genannten erfindungsgemäßen Werte liegt, der d₁₀-Wert aber kleiner 2 µm ist, kann eine Verbesserung bezüglich der Verwendbarkeit in elektrostatisch applizierbaren Beschichtungspulvern dadurch erreicht werden, daß der Staubanteil reduziert wird, so daß der d₁₀-Wert gleich oder größer 2 µm wird. Ein Kornspektrum mit d₁₀ größer 2 µm, vorzugsweise größer 3 µm, und d₉₀ kleiner 32 µm, wird besonders bevorzugt. Der d₅₀-Wert liegt zwischen 5 und 25 µm, vorzugsweise zwischen 10 und 25 µm. Die d₁₀- und d₉₀-Werte sind erfindungswesentlich. Der d₅₀-Wert handelsüblicher Glasurpulver liegt bereits häufig zwischen 10 und 25 µm. Wie aus den Beispielen und Vergleichsbeispielen hevorgeht, führt bereits eine Absenkung des d₉₀-Werts von 34 µm auf 28 µm bei gleichzeitiger Erhöhung des d₁₀-Werts von 1,5 µm auf 2,3 µm zu einer erheblichen Verbesserung in Beschichtungspulvern.

Die d₁₀-, d₅₀- und d₉₀-Werte geben den Korndurchmesser an, bei welchem der Durchgang 10, 50 und 90 Gew.-% des Pulvers beträgt. Die d₁₀-, d₅₀- und d₉₀-Werte lassen sich in bekannter Weise aus Granulometerkurven ermitteln. Die Bestimmung ist mittels handelsüblicher Geräte (wie dem CILAS Granulometer HR 850-B) möglich - siehe auch DIN 66141.

Die Überführung einbrennfähiger Materialien mit nichterfindungsgemäßer Körnung durch Kornzerkleinerung und/oder Verengung des Kornspektrums durch Sichtung zum Erhalt des gewünschten erfindungsgemäßen Kornbands kann mittels üblicher Mahlaggregate, wie Kugelmühlen und Sichtermühlen und, soweit nötig, Sichtern, ein- oder mehrstufig erfolgen.

Das Kornspektrum des Haftmittels weist zweckmäßigerweise im wesentlichen einen dio-Wert von größer 1 µm und einen dso-Wert von kleiner 35 µm, vorzugsweise kleiner 25 µm, und einen d₅₀-Wert von vorzugsweise 5 bis 15 µm auf. Die Menge an Haftmittel, bezogen auf das einbrennfähige Material, wird einerseits möglichst niedrig gehalten, andererseits so hoch, daß eine für die sich an die elektrostatische Pulverbeschichtung anschließende Handhabung, wie Dekoration der Oberfläche mittels insbesondere Siebdruck- oder anderer Drucktechniken und Einbringen in den Brennofen, ohne Beschädigung der Beschichtung möglich ist. Im allgemeinen wird die Haftmittelmenge kleiner als 10 Gew.-% und größer 0,1 Gew.-% sein; vorzugsweise liegt die Haftmittelmenge zwischen 2 und 6 Gew.-%, jeweils bezogen auf das einbrennfähige Material.

Erfindungsgemäße Glasur-Beschichtungspulver mit 2 bis 6 % Haftmittel, bezogen auf die Glasur, lassen sich im Vergleich zu nicht-erfindungsgemäßen Pulvern problemlos applizieren und führen zu fehlerfreien Glasuren.

Wie dargelegt, besteht das erfindungsgemäße Beschichtungspulver im wesentlichen aus einem pulverförmigen einbrennfähigen Material und einem Haftmittel. Unter dem Begriff "im wesentlichen" wird verstanden, daß das Beschichtungspulver zusätzlich Verarbeitungshilfsmittel enthalten kann, und zwar in einer Menge von bis zu 5 Gew.-%, vorzugsweise bis zu 2 Gew.-%, bezogen auf das einbrennfähige Material. Unter den Hilfsstoffen sind insbesondere solche zu verstehen, womit die Fluidisierung des Beschichtungspulvers verbessert werden kann. Desweiteren kann es sich um Stoffe handeln, womit die elektrostatischen Parameter des Beschichtungspulvers in gewünschter Richtung verändert werden können. Bei den Fluidisierungshilfsmitteln handelt es sich insbesondere um pyrogen hergestellte Oxide, welche ihrerseits hydrophobiert sein können. Geeignete Fluidisierungsmittel sind beispielsweise Kieselsäure, Titandioxid und Aluminiumoxid. Während in vorbekannten Beschichtungspulvern derartige Fluidisierungshilfsmittel vielfach in einer Menge zwischen 0,5 und 3 Gew.-%, zugesetzt werden mußten, kann bei dem erfindungsgemäßen Beschichtungspulver auf die Anwesenheit derartiger Fluidisierungsmittel entweder vollständig verzichtet oder der Gehalt nennenswert reduziert werden. Bevorzugte erfindungsgemäße Beschichtungspulver enthalten zwischen 0 und 0,3 Gew.-%, insbesondere 0 bis 0,2 Gew.-%, Fluidisierungsmittel, bezogen auf einbrennfähiges Material.

Unter dem Begriff "einbrennfähiges Material" werden einheitliche Stoffe oder Stoffgemische verstanden, welche bei einem keramischen Brand zu einer keramischen Schicht zusammenschmelzen oder zumindest zusammensintern. Der Erweichungspunkt des einbrennfähigen Materials liegt demgemäß üblicherweise im Temperaturbereich zwischen 450 und 1450 °C. Unter den einbrennfähigen Materialien werden insbesondere solche eingesetzt, welche die Zusammensetzung von Glasuren, Engoben, Emaillen und anderen schichtbildenden Dekorpräparaten aufweisen. Die Zusammensetzungen von Glasuren, Engoben und Emaillen sind der Fachwelt bekannt. Bei den Glasuren handelt es sich meistens um reine Glasfritten oder Gemische derselben mit bis zu 10 Gew.-% Tonmineralien, wie insbesondere Kaolin. Wesentliche Komponenten der Engoben sind Glasfritten, feinteilige Keramikrohstoffe, gemahlene Mineralien, Glas und Porzellanmehl sowie anorganische Trübungsmittel. Wesentlicher Bestandteil der Emaillen sind Emailfritten. Sofern die genannten Glasuren, Engoben, Emaillen und Dekorpräparate anorganische Pigmente enthalten, fallen diese gleichfalls unter den Begriff des einbrennfähigen Materials.

Das einbrennfähige Material kann eine hydrophobierende Umhüllung, etwa eine solche aus einem Polysiloxan, enthalten. Es ist aber ein Vorteil der erfindungsgemäßen Beschichtungspulver, daß auf eine solche Beschichtung üblicherweise verzichtet werden kann.

Erfindungsgemäße Beschichtungspulver enthalten ein physikalisch oder chemisch aktivierbares pulverförmiges organisches Haftmittel. Es kann sich hierbei um einen einheitlichen Stoff handeln oder um Stoffgemische. Das Haftmittel wird derart ausgewählt, daß es unter den Bedingungen des keramischen Brands im wesentlichen vollständig verbrennt und zu keinen Fehlern in der beim Brand erhaltenen keramischen Schicht führt. Das Haftmittel soll unter den Bedingungen der Herstellung des Beschichtungspulvers seine Haftwirkung noch nicht ausüben, sondern diese erst nach dem elektrostatischen Versprühen durch eine physikalische oder chemische Aktivierung erhalten.

Bei der physikalischen Aktivierung des Haftmittels im Beschichtungspulver handelt es sich vorzugsweise um eine thermische Behandlung bei einer Temperatur oberhalb des Schmelzpunktes des Haftmittels, wobei dieses die Teilchen der Beschichtung untereinander und an das Substrat bindet; bei der Abkühlung erstarrt das Haftmittel, und es resultiert eine haftfeste und vor dem eigentlichen Brand weiteren Dekorationsschritten zugängliche Beschichtung.

Geeignete Haftmittel, welche durch eine thermische Behandlung aktivierbar sind, sind thermoplastische Homo- und Copolymere mit einem Erweichungspunkt im Bereich zwischen 60 und 250 °C, vorzugsweise zwischen 80 und 200 °C und insbesondere zwischen 80 und 150 °C. Bei den thermoplastischen Haftmitteln handelt es sich vorzugsweise um Polyolefine, wie Paraffinwachs und Polyethylen niederer Dichte (ld-PE), ferner um Acrylat- und Methacrylatpolymere und -copolymere, Polyvinylverbindungen, wie Polystyrol, Polyvinylacetat, Ethylen/Vinylacetat-copolymere, Stryrol/Acrylat-copolymere; verwendbar sind auch Polyester und Copolyester sowie Polyamide und Copolyamide.

Bei einer weiteren Klasse von physikalisch aktivierbaren Haftmitteln handelt es sich um solche, welche durch Feuchtigkeit, etwa Wasserdampf, aktivierbar sind. Zu geeigneten Haftmitteln aus dieser Gruppe gehören insbesondere Polysaccaride und Derivate derselben, wie Dextrin.

Bei einer chemisch aktivierbaren Klasse von Haftmitteln handelt es sich um wärmehärtende Zweikomponenten-Polymersysteme. Die Wärmehärtung soll bei einer Temperatur im Bereich zwischen 60 und 250 °C stattfinden, vorzugsweise bei einer Temperatur zwischen 80 und 200 °C und insbesondere 100 bis 180 °C. Das Zweikomponentensystem enthält ein Polymer oder Präpolymer und ein Härtungsmittel in aufeinander abgestimmtem Mengenverhältnis zur ausreichenden Vernetzung. Erfindungsgemäße Beschichtungspulver mit einem Zweikomponentensystem als Haftmittel werden nach ihrem elektrostatischen Auftrag auf ein Substrat thermisch behandelt, um die Vernetzungsreaktion und damit die Fixierung der Schicht herbeizuführen.

Bei bevorzugten Zweikomponentensystemen handelt es sich um Epoxidharze mit einem Anhydridhärter oder mindestens zwei Carboxylgruppen enthaltendem Härter sowie um saure Polyester mit einem mindestens zwei Glycidylgruppen enthaltenden Härtungsmittel. Derartige Zweikomponentensysteme sind im Handel erhältlich (etwa zur Herstellung von Pulverlacken) oder können durch Zusammenmischen, gegebenenfalls durch Kneten, mit daran anschließendem Mahlen erhalten werden. Soweit erforderlich, werden bei der Herstellung der Zweikomponentenhaftmittel zusätzlich oxidische und/oder silikatische pulverförmige Hilfsmittel, die ihrerseits Bestandteil der eingebrannten Beschichtung werden, eingesetzt, um zu einem klebefreien pulverförmigen Haftmittel zu gelangen. Das Epoxidharz basiert üblicherweise auf einem Bisphenol A-Harz; als Epoxidharzhärter finden vorzugsweise anhydridische Härter Anwendung; es können jedoch auch carboxylgruppenhaltige Härter, wie 2,2,6,6-Tetracarboxyethylcyclohexanon, sowie Härter mit Imidstruktur Anwendung finden. Ein weiteres bevorzugtes Zweikomponentensystem basiert auf gesättigten carboxylierten Polyesterharzen und Triglycidylisocyanurat als Härtungsmittel.

Eine weitere Alternative eines Haftmittels basiert auf einem Gemisch aus einem Vinylgruppen enthaltenden Polymer und einem mindestens zwei Vinylgruppen enthaltenden Vernetzer; das Polymer und der Vernetzer werden so ausgewählt, daß das System der Strahlenhärtung zugänglich ist. Schließlich kommen desaktivierte Isocyanatgruppen enthaltende Polyurethanharze als Hauptbestanteil von Haftmitteln infrage; derartige Harze lassen sich chemisch aktivieren, etwa durch Behandlung mit Wasserdampf oder Ammoniak, oder durch Behandlung mit aciden Vernetzern.

Die erfindungsgemäßen elektrostatisch applizierbaren Beschichtungspulver lassen sich durch trockenes Mischen eines pulverförmigen einbrennfähigen Materials aus der Reihe der Glasuren, Engoben und Emaillen mit erfindungsgemäßer Kornverteilung mit einem durch thermische Behandlung, Behandlung mit Wasserdampf, Ammoniak oder einem aciden Vernetzer oder durch Strahlenhärtung aktivierbaren Haftmittel erhalten. Das Mischen erfolgt unter Bedingungen, unter welchen eine Aktivierung des Haftmittels noch nicht stattfindet. Intensivmischvorrichtungen, bei welchen das Mischen bei Raumtemperatur oder nur geringfügig erhöhter Temperatur erfolgt, etwa Pflugscharmischer, werden bevorzugt. Dadurch, daß das Haftmittel während der Herstellung des Beschichtungspulvers nicht aktiviert wird, erübrigt sich ein sich an das Mischen anschließender Mahlprozeß, wie er gemäß einer bevorzugten Ausführungsform im Stand der Technik erforderlich war. Die Mitverwendung flüssiger Hilfsmittel bei der Herstellung des Beschichtungspulvers, wie sie in der WO 94/26679 Anwendung fanden, wird zwar nicht ausgeschlossen, im Hinblick auf den hierbei erforderlichen zusätzlichen Aufwand wird jedoch üblicherweise auf die Verwendung derartiger flüssiger Mittel verzichtet.

Die erfindungsgemäßen Beschichtungspulver zeichnen sich durch eine außergewöhnlich gute Fluidisierbarkeit aus, so daß sie problemlos elektrostatisch appliziert werden können. Der Fluidisierungsfaktor, ausgedrückt durch das Verhältnis der maximalen Schichthöhe zur Ruheschüttung - bestimmt in einem Fluidisationsmeßgerät -, liegt im allgemeinen im Bereich zwischen 1,3 und 1,6.
Beschichtungspulver gleicher chemischer Zusammensetzung, jedoch nicht erfindungsgemäßer Kornverteilung des einbrennfähigen Materials, weisen dagegen ein ungenügendes Fluidisierungsverhalten - Fluidisierungsfaktor unter 1,3 oder wegen Störungen nicht meßbar - auf.

Mit zunehmendem Anteil Haftmittel nimmt der spezifische elektrische Widerstand des Beschichtungspulvers zu. Obgleich der spezifische elektrische Widerstand erfindungsgemäßer Beschichtungspulver mit einem Haftmittel im bevorzugten Mengenbereich im allgemeinen zwischen 10⁹ bis 10¹³ Ohm ^{.} m und damit unter demjenigen vorbekannter Beschichtungspulver mit einem Polysiloxan-umhüllten einbrennfähigen Material liegt, lassen sich derartige Beschichtungspulver überraschenderweise problemlos elektrostatisch applizieren. Hierbei lassen sich Schichtstärken erzielen, wie sie beispielsweise für die Glasierung erforderlich sind - mindestens 100 bis 250 µm und teilweise bis 400 µm.

Ein weiterer Gegenstand der Erfindung betrifft die Verwendung des Beschichtungspulvers zur Herstellung einer keramischen Beschichtung auf einem brandfähigen Substrat. Unter einem brandfähigen Substrat werden solche Substrate verstanden, welche einem keramischen Brand, also einem Brand in einem Temperaturbereich von üblicherweise zwischen 450 und 1450 °C, zugänglich sind. Unter den angewandten Brennbedingungen soll das Substrat formstabil sein. Unter brandfähigen Substraten werden demgemäß insbesondere emaillierfähige Metalle sowie keramische Materialien verstanden. Bei den keramischen Materialien kann es sich um Glas, Feinkeramik, z. B. Porzellan, Bone China und Vitreous China, Baukeramik, z. B. Fliesen und Dachziegel, sowie um Sanitärkeramik und Zierkeramik handeln. Dem erfindungsgemäßen Anwendungsverfahren sind vollständig gebrannte keramische Substrate, teilweise gebrannte, etwa bisquit-gebrannte, und ungebrannte keramische Materialien zugänglich. Vorzugsweise richtet sich das Anwendungsverfahren auf die Beschichtung teilweiser und ungebrannter keramischer Materialien. Zur Herstellung der keramischen Beschichtung auf dem Substrat wird das Beschichtungspulver in trockenem Zustand auf das gegebenenfalls vorerwärmte Substrat durch Sieben, Pudern oder Schütten, vorzugsweise aber durch elektrostatische Pulverbeschichtung, aufgebracht. Das mit dem Beschichtungspulver beschichtete Substrat wird anschließend dem keramischen Brand zugeführt. Bei dem wichtigen Anwendungsgebiet des Glasierens erfolgt der Glasurbrand von Keramik üblicherweise im Bereich zwischen 900 und 1250 °C. Sofern der Brand des keramischen Materials und der Glasur gleichzeitig erfolgen, kann die Brenntemperatur auch im Bereich bis 1450 °C liegen.

Der elektrostatische Auftrag des Beschichtungspulvers auf das zu beschichtende Substrat erfolgt unter üblichen Bedingungen für den elektrostatischen Pulverauftrag. Das Glasur-Beschichtungspulver wird in einer Vorrichtung zur Fluidisierung fluidisiert und unter Verwendung von übliche Elektrostatik-Pistolen elektrisch aufgeladen, zerstäubt un vom geerdeten Substrat angezogen. Die Aufladung des Beschichtungspulvers in der Beschichtungspistole erfolgt üblicherweise nach dem Prinzip der Corona und Supercorona; die Spannung liegt üblicherweise zwischen 30 und 100 kV, insbesondere zwischen 40 und 80 kV, die Stromstärke zwischen 50 und 90 mikroA. Der elektrostatische Pulverauftrag erfolgt in für derartige Zwecke konstruierter Kabinen. Das vom Substrat nicht angezogene Beschichtungspulver läßt sich problemlos rezyklieren und wiederverwenden.

Durch die Verwendung eines einbrennfähigen Materials mit der erfindungsgemäßen Kornverteilung konnte die Haftfestigkeit auf dem Substrat gegenüber derjenigen von Einbrennmaterialien mit nicht-erfindungsgemäßer Kornverteilung überraschenderweise erhöht werden. Die Kornverteilung der untersuchten Glasuren folgt aus Tabelle 1 des Beispiels 1; die Haftfestigkeit auf dem Substrat in Abhängigkeit von der Temperatur folgt aus Tabelle 2 dieses Beispiels.

Es wurde festgestellt, daß sich die Haftfestigkeit eines auf das Substrat elektrostatisch aufgebrachten Glasurpulvers sehr stark erhöhen läßt, wenn das Substrat vorerwärmt wird. Dieser Befund war völlig überraschend, weil durch die thermische Behandlung der elektrische Widerstand keramischer Materialien um mehrere Zehnerpotenzen ansteigt (im Falle des untersuchten Bisquit-Scherbens von 10¹⁰ Ohm auf 10¹⁶ Ohm). Gemäß einer bevorzugten Ausführungsform des erfindungsgemäßen Anwendungsverfahrens wird demgemäß das zu beschichtende Substrat vor der elektrostatischen Beschichtung auf 60 bis 250 °C, vorzugsweise 80 bis 200 °C und insbesondere 100 bis 180 °C erwärmt.

Wie bereits dargelegt, enthält das erfindungsgemäße Beschichtungspulver ein chemisch oder physikalisch aktivierbares Haftmittel. Das Verfahren zur Herstellung einer keramischen Schicht auf einem brandfähigen Substrat umfaßt daher auch einen Aktivierungsschritt. Bevorzugt wird eine thermische Aktivierung innerhalb des vorstehend genannten Temperaturbereichs. Diese thermische Aktivierung ist wirksam bei Haftmitteln, welche unterhalb der angewandten Temperatur schmelzen, ferner bei Haftmitteln, welche bei der angewandten Temperatur als Folge einer chemischen Reaktion ihre Haftwirkung ausüben. Eine thermische Aktivierung kann bereits dadurch stattfinden, daß ein vorerwärmtes Substrat auf die entsprechende Aktivierungstemperatur erwärmt wurde.

Gemäß einer bevorzugten Ausführungsform des Anwendungsverfahrens wird zusätzlich eine thermische Nachbehandlung innerhalb des zuvor genannten Temperaturbereichs - 60 bis 250 °C, vorzugsweise 80 bis 200 °C, insbesondere 100 bis 180 °C - durchgeführt. Eine thermische Nachbehandlung ist insbesondere dann zweckmäßig, wenn von der Beschichtung eine hohe Festigkeit erwartet wird. Eine solche ist dann nötig, wenn die Beschichtung vor dem Brand durch Siebdruck oder andere Beschichtungstechniken dekoriert werden soll.

Sofern das Beschichtungspulver ein durch Feuchtigkeit oder Ammoniak aktivierbares Haftmittel enthält, läßt sich die Aktivierung dadurch bewirken, daß das beschichtete Substrat in eine Feuchtigkeit, etwa Wassernebel oder Wasserdampf, beziehungsweise Ammoniak enthaltende Kammer gebracht wird.

Gemäß einer bevorzugten Ausführungsform enthält das Beschichtungspulver als Haftmittel ein durch Feuchtigkeit aktivierbares Haftmittel und zusätzlich ein pulverförmiges organisches hydrophobes Mittel, insbesondere ein hydrophobes thermoplastisches Haftmittel, etwa ein Polyolefin. Das hydrophobe Mittel, das bei der Herstellung des Beschichtungspulvers zweckmäßigerweise gleichzeitig mit dem feuchtigkeitsaktivierbaren Haftmittel trocken dem einbrennfähigen Material zugemischt wird, dient der Erhöhung des spezifischen elektrischen Widerstands des Beschichtungspulvers. Die Einsatzmenge des hydrophoben Mittels, bei welchem es sich um ein thermisch aktivierbares hydrophobes Haftmittel handeln kann, liegt zwischen 0,5 und 10 Gew.-%, vorzugsweise 0,5 bis 6 Gew.-%, bezogen auf das einbrennfähige Material. Bei der Anwendung dieses Beschichtungspulvers kann, soweit keine besondere Haftfestigkeit vor der Aktivierung gefordert wird, auf die Vorerhitzung des Substrats verzichtet werden. Die Aktivierung kann außer durch Befeuchten mittels feinst versprühtem Wasser auch mittels Wasserdampf erfolgen. Sofern die Wasserdampftemperatur oberhalb der Aktivierungstemperatur eines anwesenden thermisch aktivierbaren hydrophoben Mittels liegt, kann das hydrophobe Mittel als zusätzliches Haftmittel wirken.

Im Falle der Anwesenheit eines strahlenhärtenden Haftmittels im Beschichtungspulver wird das beschichtete Substrat zwecks Aktivierung einer wirksamen Strahlenquelle ausgesetzt.

Im Anschluß an die Aktivierung und gegebenenfalls Dekorierung der ungebrannten Beschichtung erfolgt der Brand unter solchen Brennbedingungen, welche auf das in der Beschichtung enthaltende einbrennfähige Material abgestimmt sind und ein glattes Schmelzen oder zumindest Sintern der Beschichtung erlauben.

Die erfindungsgemäßen Beschichtungspulver führen bei der elektrostatischen Beschichtung brandfähiger Substrate zu außergewöhnlichen und unerwarteten Vorteilen:

Das erfindungsgemäße Beschichtungspulver ist wesentlich besser fluidisierbar als herkömmliche Beschichtungspulver. Der Fluidisierungsfaktor liegt in der Regel über 1,3 , oft um 1,6. Zum Erhalt einer guten Fluidisierbarkeit kann auf die Verwendung eines üblichen Fluidisierungshilfsmittels ganz oder weitgehend verzichtet werden. Aufgrund der guten Fluidisierung des Beschichtungspulvers kommt es während des Besprühens zu keinen technischen Problemen.

Ein weiterer Vorteil erfindungsgemäßer Sprühpulver besteht darin, daß es zu keinen Anbackungen des Pulvers an dem Prallteller und der Mittelelektrode der Sprühpistole kommt. Aufgrund des Fehlens derartiger Anbackungen kommt es auch zu keinen Fehlern in der Oberfläche der keramischen Schicht, wie sie bisher durch unkontrolliertes Abplatzen der Anbackungen und damit Niederschlagen derselben auf dem Substrat unvermeidbar waren.

Durch Verwendung eines Beschichtungspulvers mit einer erfindungsgemäßen Kornverteilung des einbrennfähigen Materials konnte der Wirkungsgrad der elektrostatischen Abscheidung gegenüber Beschichtungspulvern mit nicht-erfindungsgemäßer Kornzusammesetzung des einbrennfähigen Materials etwa verdoppelt werden.

Durch Verwendung eines erfindungsgemäßen Beschichtungspulvers konnte ein bisher häufig auftretendes Problem, nämlich eine zu geringe Schichtstärke der Beschichtung (häufig unter 100 µm), gelöst werden. Erfindungsgemäß lassen sich problemlos Beschichtungsstärken im Bereich zwischen 100 und 700 µm erzielen. Damit läßt sich das erfindungsgemäße Verfahren auch sehr gut zum Glasieren verwenden, wo Schichtdicken zwischen über 100 µm, meistens um 250 µm und teilweise bis 400 µm erforderlich sind.

Die erfindungsgemäße Beschichtung eines brandfähigen Substrats mit einem erfindungsgemäßen Beschichtungspulver führt zu einer hohen Festigkeit der ungebrannten Beschichtung. Derart beschichtete Substrate lassen sich damit vor dem Brand dekorieren.

Ein wesentlicher Vorteil der Verwendung erfindungsgemäßer Beschichtungspulver bei der Herstellung keramischer Schichten mittels elektrostatischer Applizierung des Beschichtungspulvers liegt im Erhalt einer qualitativ hochwertigen Oberfläche der Beschichtung nach dem Brand. Die Oberfläche ist glatt oder nur sehr gering gewellt, wohingegen Beschichtungen unter Verwendung nichterfindungsgemäßer Beschichtungspulver meistens stark wellig sind und einen unerwünschten Hammerschlageffekt geben.

Zusätzlich sind erfindungsgemäß hergestellte keramische Schichten frei von Glasurlöchern und anderen Glasurfehlern.

Wie bereits ausgeführt, zeichnen sich erfindungsgemäße Beschichtungspulver im allgemeinen durch einen niedrigeren Haftmittelgehalt aus und lassen sich in einfacherer Weise herstellen als bevorzugte vorbekannte Beschichtungspulver.

Anhand der nachfolgenden Beispiele wird die Erfindung weiter erläutert.

### Beispiel 1

Untersucht wurde der Einfluß der Vorerwärmung (je 30 Minuten) des zu beschichtenden Scherbens auf die Haftfestigkeit eines elektrostatisch aufgebrachten Glasurpulvers (ohne weitere Zusatzstoffe oder Haftmittel). Bestimmt wurde die Haftfestigkeit unter Verwendung chemisch gleicher Glasuren mit unterschiedlichen Kornspektren - siehe Tabelle 1.

**Tabelle 1**

| Durchgang in % | Korngröße *) (µm) bei angegebenem prozentualem Durchgang (d-Wert) | | | |
|---|---|---|---|---|
| | G_{H} **) | G_{E1} **) | G_{E2} **) | G_{HS} **) |
| d₁₀-Wert | 1,5 | 2,3 | 3,6 | 3,0 |
| d₅₀-Wert | 11,1 | 14,4 | 22,5 | 16,8 |
| d₉₀-Wert | 34,1 | 28,5 | 31,0 | 43,3 |

| | | | | |
|---|---|---|---|---|
| **) G_{E1} und G_{E2} haben eine erfindungsgemäße, G_{H} und G _{HS} keine erfindungsgemäße Kornverteilung | | | | |
| *) bestimmt mittels CILAS Granulometer HR850-B nach DIN 66141 | | | | |

Tabelle 2 zeigt sowohl den Einfluß der Vorerwärmungstemperatur als auch des Kornspektrums des Glasurpulvers auf die Haftfestigkeit. Durch die höhere Haftfestigkeit wird der beschichtete Gegenstand vor dem Brennen besser handhabbar.

Die in Tabelle 2 angegebene Haftfestigkeit wurde wie folgt bestimmt: Der elektrostatisch beschichtete Scherben wird auf den Kopf gestellt (beschichtete Seite nach unten) und in einer dafür vorgesehenen Halterung fixiert. Aus einer definierten Höhe (h = 70 cm) wird eine Hartgummikugel (m = 0,005 kg) mittig auf das Substrat fallen gelassen. Ein elektrostatisch gut aufgeladenes Pulver haftet nach dem Falltest weiterhin auf dem keramischen Scherben. Das nach dem Falltest am Substrat fixierte Pulver wird in Relation zum ursprünglichen gesamten Pulverauftrag gesetzt. Man erhält die Haftfestigkeit des Glasurpulvers in Prozent.

**Tabelle 2**

| Haftfestigkeit auf Bisquitscherben (BS) und Rohscherben (RS) | | | | | |
|---|---|---|---|---|---|
| | | Haftfestigkeit (%) | | | |
| | Scherben | Vorerwärmung (30 Minuten) | | | |
| Glasur | | 20 °C | 100 °C | 180 °C | 250 °C |
| G_{H} | BS | 0 - 6 | 6 - 10 | 17 - 22 | 10 - 15 |
| G_{E1} | BS | 0 - 6 | 12 - 17 | 46 - 50 | 30 - 35 |
| G_{E2} | BS | 0 - 6 | 13 - 18 | 48 - 54 | 40 - 45 |
| G_{E3} | BS | 0 - 6 | 6 - 10 | 12 - 16 | 6 - 10 |

| | | 20 °C | 60 °C | 100 °C | 140 °C |
|---|---|---|---|---|---|
| G_{E1} | RS | 2 - 7 | 35 - 40 | 57 - 63 | 29 - 35 |
| G_{HS} | RS | 2 - 7 | 13 - 17 | 23 - 27 | 11 - 17 |

### Beispiel 2

Die Beschichtungspulver wurden hergestellt durch trockenes Mischen des Glasurpulvers G_{H}, G_{E1} beziehungsweise G_{E2} mit 2, 4, 6, 8 und 10 Gew.-%, bezogen auf die Glasur, Haftmittel. Das eingesetzte pulverförmige Polyethylenwachs (PE) hatte eine Erweichungstemperatur 135 °C, einen d₁₀-Wert von 1,8 µm, einen dso-Wert von 10,5 µm und einen d₉₀-Wert von 16,9 µm. Das eingesetzte Zweikomponenten Haftmittel auf der Basis eines Epoxidharzes auf der Basis von Bisphenol A und einem Anhydridhärter (EP/H) hatte einen dio-Wert von 1,5 µm, d₅₀-Wert von 9,9 µm und d₉₀-Wert von 17 µm. Die Mischtemperatur betrug etwa Raumtemperatur. Ein Fluidisierungshilfsmittel wurde nicht verwendet.

Einige für die elektrostatische Beschichtung wichtige Stoffeigenschaften von GE2, G_{E1} und G_{H} sowie sie enthaltenden Beschichtungspulvern folgen aus der Tabelle 3.

**Tabelle 3**

| Glasur bzw. Beschichtungspulver | Fluidisierungsfaktor F | spezifischer Widerstand (Ohm ^{.} m) |
|---|---|---|
| G_{H} | nicht meßbar | 3 ^{.} 10⁶ |
| G_{E1} | 1,4 | 8 ^{.} 10⁶ |
| G_{E2} | 1,4 | 3 ^{.} 10⁷ |
| GH + 6 % PE | nicht meßbar | 1 ^{.} 10⁹ |
| G_{E1} + 6 % PE | 1,6 | 5 ^{.} 10¹¹ |
| G_{E2} + 6 % PE | 1,7 | 5 ^{.} 10¹² |
| G_{H} + 6 % EP/H | nicht meßbar | 6 ^{.} 10⁹ |
| G_{E1} + 6 % EP/H | 1,6 | 7 ^{.} 10¹¹ |

Bestimmung der Fluidisierbarkeit:

Die Fluidisierbarkeit ist wichtig für die Beurteilung der Verarbeitbarkeit des Pulvers in pneumatischen Fördereinrichtungen, also die Aufbereitung eines Pulver-Luft-Gemischs im Vorratsbehälter und den pneumatischen Transport durch einen Förderschlauch zum Sprühgerät. Das Fluidisationsmeßgerät besteht aus einem Glaszylinder mit einer feinporigen Bodenplatte. Die Luftdurchflußmenge wird allmählich erhöht. Dadurch vergrößert sich das Volumen der eingefüllten Pulverschüttung, bis die maximale Ausdehnung erreicht wird (Grenzgasmenge). Gut fluidisierbare Pulver zeigen dabei eine glatte Oberfläche ohne Austrag von Feinanteilen. Der Fluidisierungsfaktor F wird ausgedrückt durch das Verhältnis der maximalen Schichthöhe hₘₐₓ zur Ruheschüttung hₒ.

Gut fluidisierbare Beschichtungspulver haben einen Fluidisierungsfaktor von größer 1,3 bis 1,6. Schlecht fluidisierbare Pulver sind charakterisiert durch die Ausbildung vertikaler Kanäle in der Pulverschüttung, was infolge der dort herrschenden hohen Strömungsgeschwindigkeiten auch zu einer unruhigen Oberfläche und dem Austrag von Feinpulver führt.

Bestimmung des spezifischen elektrischen Widerstands:

Meßmethode und -apparatur nach DIN IEC 93:
- zylindrische Meßzelle mit Schutzringelektrode;
- Elektrodenabstand 5 mm; Hochohmwiderstandsmeßgerät Typ Teralog 6202 (STATRON);
- gewählte Meßspannung UM = 1 V bis zu einem spez. Widerstand = 10⁶ Ohm ^{.} m, 10 V bis 10⁷ Ohm ^{.} m; UM = 1000 V bei Pulvern mit einem spez. Widerstand >10⁹ Ohm ^{.} m.
Die Meßspannung wurde immer 1 Minute nach Einfüllen der Pulverprobe in die Meßzelle angeschlossen (um konstante und reproduzierbare Schüttdichten im Elektrodenzwischenraum zu gewährleisten). Das Ablesen des Meßwertes erfolgte 1 Minute nach dem Einschalten der Meßspannung.

Aus den in Tabelle 3 angegebenen Daten folgt, daß durch das erfindungsgemäße Kornspektrum die Fluidisierbarkeit und der spezifische Widerstand in für die Beschichtung günstiger Weise erhöht werden.

### Beispiel 3 und Vergleichsbeispiel 1

Untersucht wurde das elektrostatische Glasieren, wobei Beschichtungspulver, enthaltend eine handelsübliche Glasur (G_{H}) im Vergleich zu solchen mit Glasuren mit erfindungsgemäßem Kornspektrum (G_{E1}) und G_{E2}) eingesetzt wurden. Haftmittel war ein Polyethylenwachs mit den in Beispiel 2 angegebenen Stoffdaten.

Sprühbedingungen: Besprüht wurden Bisquitscherben (Fläche 225 cm²). Die Scherben wurden vor dem elektrostatischen Beschichten 30 Minuten auf 180 °C vorerwärmt. Das elektrostatische Besprühen erfolgte unter Verwendung einer Hochspannungspistole (Firma Gema Volstatic, CH-St. Gallen) Prinzip Supercorona, Spannung 70 kV; Stromstärke 60 µA; Förderluftdruck 1 bar; Fluidluftdruck 1,2 bar; Dosierluftmenge 0,5 m³/h; Zerstäuberluftmenge 4 m³/h.

Nach dem elektrostatischen Besprühen wurde zwecks Bestimmung der Haftfähigkeit 10 Minuten bei 180 °C getempert. Der Brand erfolgte 60 Minuten bei 1170 °C. Die Ergebnisse folgen aus Tabelle 4. Das erfindungsgemäße Verfahren unter Verwendung erfindungsgemäßer Beschichtungspulver zeichnet sich durch folgende Vorteile aus: verbesserte Fluidisierung, keine Verklumpung im Förderschlauch; problemloser Auftrag der gewünschten Pulvermenge; keine Anbackung am Prallteller; gleichmäßige, nur gering gewellte Glasuroberfläche, keine Glasurlöcher; optimales Ergebnis bei geringerer Haftmittelmenge als im Stand der Technik.

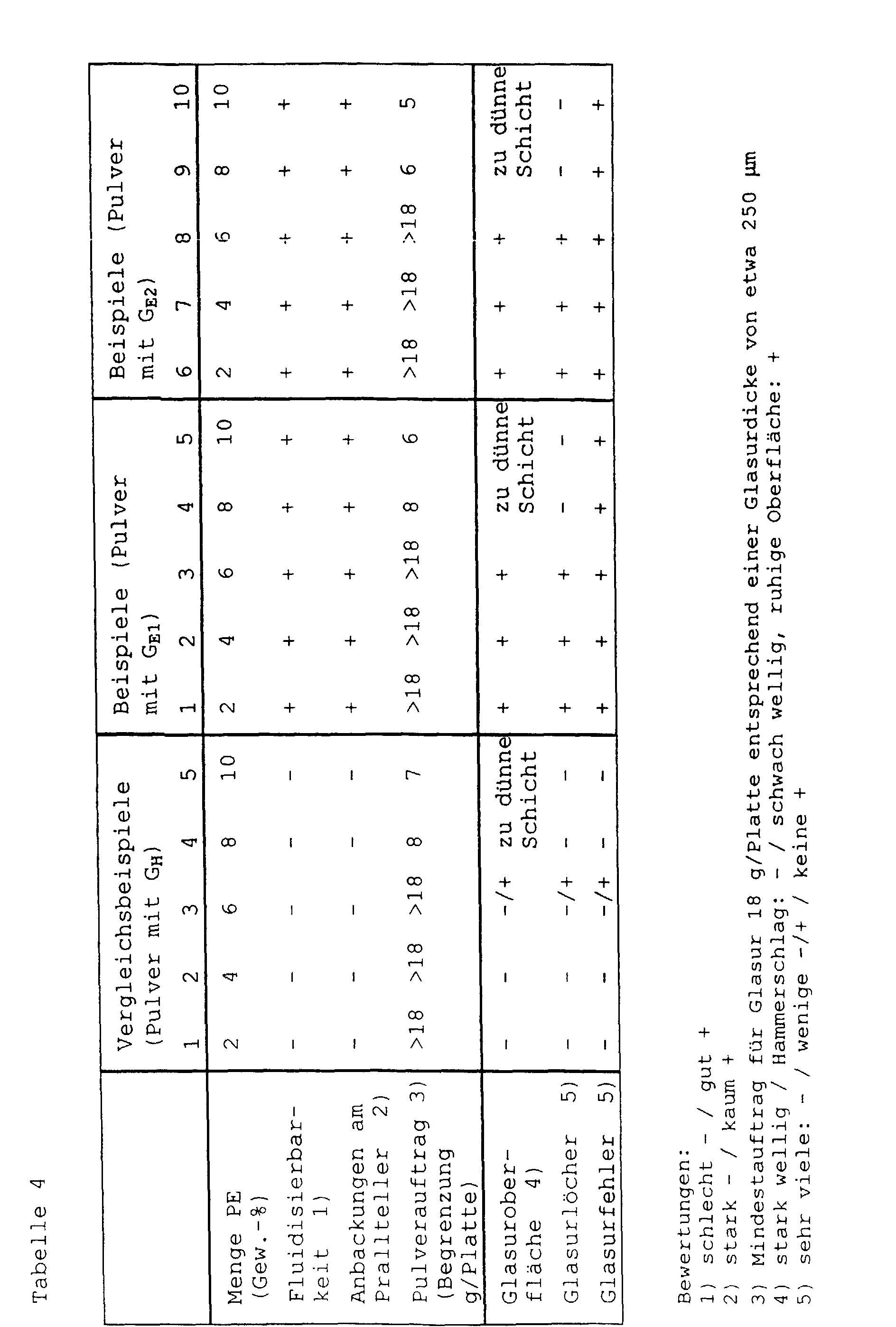

### Beispiel 4 und Vergleichsbeispiel 2

Analog Beispiel 3 und Vergleichsbeispiel 1 wurden Beschichtungspulver hergestellt und getestet. Anstelle des Polyethylenwachses wurde als Haftmittel ein wärmehärtendes Harz (EP/H) eingesetzt, nämlich ein Pulver aus 84 Gew.-% Epoxidharz auf Basis Bisphenol A (Araldit GT 6450, Ciba-Geigy) und 16 Gew.-% Anhydridhärter (HT 3380, Ciba-Geigy). Diese Haftmittelformulierung hatte eine Gelierzeit bei 180 °C von 80 Sekunden. Das pulverförmige Haftmittel hatte einen d₁₀-Wert von 1,5 µm, einen d₅₀-Wert von 9,9 µm und einen d₉₀-Wert von 17,0 µm. Haftmittel und Glasur wurden zur Herstellung des Beschichtungspulvers trocken bei Raumtemperatur gemischt. Eingesetzt wurden die Glasuren G_{H} (Vergleichsbeispiel) und G_{E1} (erfindungsgemäß).

Das Substrat, Bisquitscherben wurde vor dem Beschichten 30 Minuten bei 180 °C vorerwärmt und nach dem Beschichten 10 Minuten bei 180 °C getempert. Brennen 60 Minuten bei 1170 °C.

Durch das erfindungsgemäße Glasur-Kornspektrum im Beschichtungspulver konnte der Wirkungsgrad des Pulverauftrags (= aufgebrachte Pulvermenge zu versprühter Pulvermenge) überraschenderweise wesentlich gesteigert werden, wodurch sich die Wirtschaftlichkeit verbesserte - siehe Tabelle 5.

**Tabelle 5**

| Beispiel | Beschichtungspulver | Wirkungsgrad |
|---|---|---|
| VB 2 | Glasur G_{H} + 6 Gew.-% Haftmittel EP/H | 10 % |
| B 4 | Glasur G_{E1} + 6 Gew.-% Haftmittel EP/H | 18 - 22 % |

Tabelle 6 zeigt den spezifischen elektrischen Widerstand von Beschichtungspulvern mit der Glasur G_{H} bzw. G_{E1} und dem Haftmittel EP/H in Abhängigkeit von der Haftmittelmenge. Mit zunehmender Haftmittelmenge wird die auftragbare Schichtstärke geringer - durch Rücksprüheffekte.

**Tabelle 6**

| | | spez. elektr. Widerstand (Ohm ^{.} m) | maximale Schichtstärke (µm) |
|---|---|---|---|
| B 4 | G_{EH1} + 0 % EP/H | 3 ^{.} 10⁶ | 700 |
| | a) " + 2 % EP/H | 2 ^{.} 10⁹ | 600 |
| | b) " + 4 % EP/H | 10¹¹ | 500 |
| | c) " + 6 % EP/H | 3 ^{.} 10¹² | 400 |
| | d) " + 8 % EP/H | 4 ^{.} 10¹² | 200 |
| | | | |
| VB 2 | GH + 0 % EP/H | 3 ^{.} 10⁶ | 700 |
| | a) " + 2 % EP/H | 2 ^{.} 10⁷ | 400 |
| | b) " + 4 % EP/H | 10⁹ | 250 |
| | c) " + 6 % EP/H | 10¹¹ | 200 |
| | d) " + 8 % EP/H | 2 ^{.} 10¹¹ | 120 |

Die Ergebnisse, betreffend Eigenschaften des Beschichtungspulvers und der Glasureigenschaften folgen aus der Tabelle 7.

**Tabelle 7**

| | B 4 | VB 2 |
|---|---|---|
| Haftfähigkeit (%) | (a): 95 | (a): 95 |
| (nach Temperung) | (b)-(d): 100 | (b)-(d): 100 |
| | | |
| Fluidisierbarkeit (Faktor) | (c) gut, F = 1,6 | (c) schlecht, F = nicht meßbar |
| | | |
| Anbackungen an Prallteller und Mittelelektrode | (a)-(d): keine | (a) und (d): starkes Anbacken |
| | | |
| Glasuroberfläche | (a)-(c): glatt, ruhig, keine Spratzer, keine Nadelstiche, keine Löcher | (a) und (b): viele Spratzer und Nadelstiche |
| | | (c) und (d): viele Löcher und Krater durch starke Rückionisation |
| | | |
| Auftragsmenge | (a)-(c): 18-20 | (a)-(c): 18-20 |
| (g/Platte) | (d): 8-10 | (d) : 8 |

## Patentansprüche

1. Elektrostatisch applizierbares Beschichtungspulver, bestehend aus im wesentlichen einem pulverförmigen einbrennfähigen Material aus der Reihe der Glasuren, Engoben und Emaillen und einem durch thermische Behandlung, Behandlung mit Wasserdampf, Ammoniak oder einem aciden Vernetzer oder durch Strahlenhärtung aktivierbaren pulverförmigen organischen Haftmittel,
dadurch gekennzeichnet,
daß das pulverförmige einbrennfähige Material eine Kornverteilung mit einem d₉₀-Wert von kleiner 35 µm, einem d₅₀-Wert im Bereich von 5 bis 25 µm und einem d₁₀-Wert von gleich oder größer 2 µm aufweist.

2. Beschichtungspulver nach Anspruch 1,
dadurch gekennzeichnet,
daß der d₉₀-Wert des einbrennfähigen Materials kleiner 32 µm ist und der d₃₀-Wert zwischen 10 und 25 µm liegt.

3. Beschichtungspulver nach Anspruch 1 oder 2,
dadurch gekennzeichnet,
daß das pulverförmige Haftmittel eine Kornverteilung mit einem d₉₀-Wert von kleiner 35 µm und einem d₁₀-Wert von größer 1 µm aufweist.

4. Beschichtungspulver nach einem der Ansprüche 1 bis 3,
dadurch gekennzeichnet,
daß es im wesentlichen aus einbrennfähigem Material und 2 bis 6 Gew.-% Haftmittel sowie 0 bis 0,3 Gew.-% Fluidisierungsmittel, jeweils bezogen auf das einbrennfähige Material, besteht.

5. Beschichtungspulver nach einem der Ansprüche 1 bis 4,
dadurch gekennzeichnet,
daß das einbrennfähige Material eine Glasur- oder Engobe-bildende Zusammensetzung aufweist.

6. Beschichtungspulver nach einem oder Ansprüche 1 bis 5,
dadurch gekennzeichnet,
daß es als Haftmittel ein thermoplastisches Polymer mit einem Erweichungspunkt zwischen 80 und 150 °C aus der Reihe der Polyolefine und Polyacryl- oder Polymethacrylester enthält.

7. Beschichtungspulver nach einem der Ansprüche 1 bis 5,
dadurch gekennzeichnet,
daß es als Haftmittel ein bei 80 bis 200 °C wärmehärtendes Zweikomponenten-Polymersystem aus der Reihe der Epoxidharze mit einem Anhydrid oder mindestens zwei Carboxylgruppen enthaltenden Härter und der sauren Polyester mit einem mindestens zwei Glycidylgruppen enthaltenden Härter.

8. Verfahren zur Herstellung eines elektrostatisch applizierbaren Beschichtungspulvers gemäß einem der Ansprüche 1 bis 7, umfassend trockenes Mischen eines pulverförmigen einbrennfähigen Materials aus der Reihe der Glasuren, Engoben und Emaillen mit einem durch thermische Behandlung, Behandlung mit Wasserdampf, Ammoniak oder einem aciden Vernetzer oder durch Strahlenhärtung aktivierbaren Haftmittel,
dadurch gekennzeichnet,
daß man als einbrennfähiges Material ein solches verwendet, dessen Kornverteilung einen d₉₀-Wert von kleiner 35 µm, einen d₅₀-Wert im Bereich von 5 bis 25 µm und einen d₁₀-Wert von gleich oder größer 2 µm aufweist, und die Temperatur und Atmosphäre während des Mischens keine Aktivierung des Haftmittels herbeiführen.

9. Verfahren zur Herstellung einer keramischen Beschichtung auf einem brandfähigen Substrat, umfassend elektrostatisches Auftragen eines Beschichtungspulvers, Aktivierung eines im Beschichtungspulver enthaltenden organischen Haftmittels zwecks Erhöhung der Haftfestigkeit auf dem Substrat und Brennen des beschichteten Substrats unter auf im Beschichtungspulver enthaltenden einbrennfähigen Material abgestimmten Brennbedingungen,
dadurch gekennzeichnet,
daß man als Beschichtungspulver ein solches gemäß einem der Ansprüche 1 bis 7 verwendet.

10. Verfahren nach Anspruch 9,
dadurch gekennzeichnet,
daß man als brandfähiges Substrat ein nichtmetallisches ungebranntes oder teilweise gebranntes keramisches Substrat verwendet.

11. Verfahren nach Anspruch 9 oder 10,
dadurch gekennzeichnet,
daß man das zu beschichtende Substrat vor der elektrostatischen Beschichtung auf eine Temperatur im Bereich von 60 bis 250 °C erwärmt.

12. Verfahren nach einem der Ansprüche 9 bis 11,
dadurch gekennzeichnet,
daß man das beschichtete Substrat im Anschluß an die elektrostatische Beschichtung mit einem ein wärmeaktivierbares Haftmittel enthaltenden Beschichtungspulver bei einer Temperatur von 60 bis 250 °C zwecks Aktivierung des Haftmittels behandelt.

13. Verfahren nach einem der Ansprüche 9 bis 12,
dadurch gekennzeichnet,
daß man nach der Aktivierung des Haftmittels aber vor dem Brand auf das beschichtete Substrat unter Verwendung üblicher Drucktechniken, insbesondere der Siebdrucktechnik, ein Dekor aufbringt und dieses zusammen mit der Beschichtung einbrennt.

14. Mit einer einbrennfähigen Beschichtung beschichtetes brandfähiges Substrat, erhalten im Rahmen des Verfahrens nach einem der Ansprüche 9 bis 13, wobei das Haftmittel aktiviert, aber die Beschichtung noch nicht eingebrannt worden ist.

15. Verwendung eines Beschichtungspulvers nach einem der Ansprüche 1 bis 10 zum Glasieren, Engobieren oder Dekorieren keramischer Substrate.

## Claims

1. Electrostatically applicable powder coating consisting substantially of a pulverulent stovable material from the range of glazes, engobes and enamels and a pulverulent organic coupling agent activatable by heat treatment, treatment with steam, ammonia or an acidic crosslinking agent or by radiation curing,
characterised in that
the pulverulent stovable material has a grain size distribution with a d₉₀ value of less than 35 µm, a d₅₀ value in the range from 5 to 25 µm and a d₁₀ value of greater than or equal to 2 µm.

2. Powder coating according to claim 1,
characterised in that
the d₉₀ value of the stovable material is less than 32 µm and the d₅₀ value is between 10 and 25 µm.

3. Powder coating according to claim 1 or 2,
characterised in that
the pulverulent coupling agent has a grain size distribution with a d₉₀ value of less than 35 µm and a d₁₀ value of greater than 1 µm.

4. Powder coating according to one of claims 1 to 3,
characterised in that
it substantially consists of a stovable material and 2 to 6 wt.% of coupling agent together with 0 to 0.3 wt.% of fluidising agent, in each case relative to the stovable material.

5. Powder coating according to one of claims 1 to 4,
characterised in that
the stovable material has a glaze- or engobe-forming composition.

6. Powder coating according to one of claims 1 to 5,
characterised in that
it contains as coupling agent a thermoplastic polymer having a softening point of between 80 and 150°C from the range of polyolefins and polyacrylic or polymethacrylic esters.

7. Powder coating according to one of claims 1 to 5,
characterised in that
it contains as coupling agent a two component polymer system which heat cures at 80 to 200°C from the range of epoxy resins with a curing agent containing anhydride or at least two carboxyl groups and of acidic polyesters having a curing agent containing at least two glycidyl groups.

8. Process for the production of an electrostatically applicable powder coating according to one of claims 1 to 7, comprising dry mixing of a pulverulent stovable material from the range of glazes, engobes and enamels with a pulverulent organic coupling agent activatable by heat treatment, treatment with steam, ammonia or an acidic crosslinking agent or by radiation curing,
characterised in that
the stovable material used has a grain size distribution with a d₉₀ value of less than 35 µm, a d₅₀ value in the range from 5 to 25 µm and a d₁₀ value of greater than or equal to 2 µm, and the temperature and atmosphere cause no activation of the coupling agent during mixing.

9. Process for the production of a ceramic coating on a fireable substrate comprising electrostatic application of a powder coating, activation of an organic coupling agent contained in the powder coating in order to increase adhesion to the substrate and firing of the coated substrate under conditions adjusted to the stovable material contained in the powder coating,
characterised in that
the powder coating used is one according to one of claims 1 to 7.

10. Process according to claim 9,
characterised in that
the fireable substrate used is a non-metallic unfired or partially fired ceramic substrate.

11. Process according to claim 9 or 10,
characterised in that
the substrate to be coated is heated to a temperature in the range from 60 to 250°C before electrostatic coating.

12. Process according to one of claims 9 to 11,
characterised in that
the substrate, once electrostatically coated with a powder coating containing a heat-activatable coupling agent, is treated at a temperature of 60 to 250°C in order to activate the coupling agent.

13. Process according to one of claims 9 to 12,
characterised in that,
after activation of the coupling agent but before firing, decoration is applied onto the coated substrate using conventional printing techniques, in particular screen printing, and this decoration is fired together with the coating.

14. Fireable substrate coated with a stovable coating obtained according to the process of one of claims 9 to 13, wherein the coupling agent has been activated, but the coating has not yet been fired.

15. Use of a powder coating according to one of claims 1 to 10 for glazing, engobing or decorating ceramic substrates.

## Revendications

1. Poudre de revêtement applicable par un moyen électrostatique, constituée essentiellement d'un matériau combustible pulvérulent de la série des engobes et des émaux et adhésif organique pulvérulent activable par un traitement thermique, un traitement avec de l'hydrogène, de l'ammoniac ou un agent réticulant acide ou par un durcissement par irradiation,
caractérisé en ce que
le matériau combustible pulvérulent présente une granulométrie avec une valeur de d₉₀ inférieure à 35 µm, une valeur de d₅₀ comprise entre 5 et 25 µm et une valeur de d₁₀ égale ou supérieure à 2 µm.

2. Poudre de revêtement selon la revendication 1,
caractérisée en ce que
la valeur de d₉₀ du matériau combustible est inférieure à 32 µm et en ce que la valeur de d₃₀ est comprise entre 10 et 25 µm.

3. Poudre de revêtement selon la revendication 2,
caractérisée en ce que
l'adhésif pulvérulent présente une répartition granulométrique avec une valeur de d₉₀ inférieure à 35 µm et une valeur de d₁₀ supérieure à 1 µm.

4. Poudre de revêtement selon l'une des revendications 1 à 3,
caractérisée en ce qu'
elle se compose essentiellement d'un matériau combustible et de 2 à 6 % en poids d'adhésif ainsi que de 0 à 0,3 % en poids d'agent fluidisant, toujours par rapport au matériau combustible.

5. Poudre de revêtement selon l'une des revendications 1 à 4,
caractérisée en ce que
le matériau combustible présente une composition formant glaçure ou engobe.

6. Poudre de revêtement selon l'une des revendications 1 à 5,
caractérisée en ce qu'
elle contient comme adhésif un polymère thermoplastique ayant un point de ramollissement compris entre 80 et 150°C de la série de polyoléfines et des esters polyacryliques ou polyméthacryliques.

7. Poudre de revêtement selon l'une des revendications 1 à 5,
caractérisée en ce qu'
elle contient comme adhésif un système polymère à deux composants durcissant entre 80 et 200°C de la série des résines époxydes avec un anhydride ou un agent durcissant contenant au moins deux groupes carboxyle avec des polyesters acides avec un agent durcissant contenant au moins deux groupes glycidyle.

8. Procédé de fabrication d'une poudre de revêtement applicable par un moyen électrostatique selon l'une des revendications 1 à 7, comprenant le mélange à sec d'un matériau combustible pulvérulent de la série des glaçures, engobes et émaux, avec un traitement thermique, un traitement avec de la vapeur d'eau, de l'ammoniac ou un agent réticulant acide ou par un adhésif activable par un durcissement par irradiation,
caractérisé en ce qu'
on utilise comme matériau combustible un matériau dont la répartition granulométrique présente une valeur de d₉₀ inférieure à 35 µm, une valeur de d₅₀ comprise entre 5 et 25 µm et une valeur de d₁₀ égale ou supérieure à 2 µm, et en ce que la température et l'atmosphère ne produisent au cours du mélange aucune activation de l'adhésif.

9. Procédé de fabrication d'un revêtement céramique constitué d'un substrat résistant au feu, comprenant le dépôt électrostatique d'une poudre de revêtement, l'activation d'un adhésif organique contenu dans la poudre de revêtement aux fins d'accroissement de l'adhésion au substrat et la combustion du substrat revêtu dans des conditions de cuisson déterminées par le matériau combustible contenu dans la poudre de revêtement,
caractérisé en ce qu'
on utilise comme poudre de revêtement une poudre selon l'une des revendications 1 à 7.

10. Procédé selon la revendication 9,
caractérisé en ce qu'
on utilise comme substrat résistant au feu un substrat céramique non métallique non cuit ou partiellement cuit.

11. Procédé selon la revendication 9 ou 10,
caractérisé en ce qu'
on chauffe le substrat à revêtir avant le revêtement électrostatique à une température comprise entre 60 et 250°C.

12. Procédé selon l'une des revendications 9 à 11,
caractérisé en ce qu'
on traite le substrat à revêtir après le revêtement électrostatique avec une poudre de revêtement contenant un adhésif activable à la chaleur à une température de 60 à 250°C aux fins d'activation de l'adhésif.

13. Procédé selon l'une des revendications 9 à 12,
caractérisé en ce qu'
après l'activation de l'adhésif mais avant la cuisson du substrat revêtu on applique un décor sur le substrat revêtu en utilisant des techniques d'impression habituelles, en particulier la technique de sérigraphie, et en ce qu'on fait cuire ce décor avec le revêtement.

14. Substrat résistant au feu enduit d'un revêtement combustible, obtenu dans le cadre du procédé selon l'une des revendications 9 à 13, dans lequel l'adhésif est activé, mais le revêtement n'a pas encore été cuit.

15. Utilisation d'une poudre de revêtement selon l'une des revendications 1 à 10 pour le glaçage, l'engobage ou le décor de substrats céramiques.
